# EUROPEAN PATENT SPECIFICATION

(11) **EP 0 505 080 B1**
(45) Date of publication and mention of the grant of the patent: **06.05.1999**
(21) Application number: 92302067.1
(22) Date of filing: 11.03.1992
(51) Int. Cl.: H01M 2/34, H01M 2/30

(54) **Non-reversible cells**
Nichtumkehrbare Zellen
Piles non-réversibles

(30) Priority: 11.03.1991 US 666986
(43) Date of publication of application: 23.09.1992
(73) Proprietor: EVEREADY BATTERY COMPANY, INC., St. Louis Missouri 63164 (US)
(72) Inventor: Huhndorff, Harry R., Bay Village Ohio 44140 (US); Roberts, Charles Allen, Rocky River Ohio 44116 (US)
(74) Representative: Lord, Hilton David

(56) References cited:
- EP-A- 0 309 101
- WO-A-89/03596
- DE-A- 3 935 366
- FR-A- 597 057
- FR-A- 1 103 391
- GB-A- 1 010 850
- GB-A- 2 021 849
- US-A- 1 529 703
- US-A- 3 887 396
- US-A- 4 751 150
- PATENT ABSTRACTS OF JAPAN vol. 9, no. 263 (E-351)(1986) 19 October 1985

## Description

The present invention relates to electrochemical cells having two terminals located on the housing of the cell, at least one of the terminals being able to prevent the flow of electrical current when the cell is reversed.

Conventional dry cells are usually tubular in shape with a positive terminal on one end and a negative terminal on the other end. When the cells are used in a multicell device, such as a flashlight, radio or tape recorder, they are commonly aligned in an end-to-end configuration whereby the positive terminal of one battery contacts the negative terminal of a second adjacent battery.

Directions on how to properly insert cells into a device are usually provided by the device manufacturer, but there is still a small chance of a user inadvertently inserting at least one of the cells with the electrical polarities of the cell reversed, that is, one of the cell's terminals contacts the identical terminal on an adjacent cell so that the abutting terminals have the same electrical polarity.

Apart from failure of the device to work properly, if at all, the primary danger associated with a reversed cell is that the properly oriented cells may charge the reversed cell when the device is turned on. Charging a cell leads to an increase in internal pressure, due to the generation of hydrogen gas, and this may lead to activation of the cell's safety vent. This, in turn, can result in the leakage of caustic electrolyte through the ruptured safety vent.

In addition, incorrect orientation of a cell, commonly referred to as cell reversal, in a device should be avoided because of the electrical damage that can be done to the device's electrical components when current is forced backwards through the circuit.

Various attempts have been made to overcome the problem of cell reversal in multi-cell devices. For example, one solution depends upon the reversed cell's terminal directly contacting one of the device's terminals. Thus, US-A-4,595,641 discloses a battery compartment for a multi-cell device that has an insulating member on the positive contact assembly of the device to prevent electrical contact with the negative terminal of an improperly inserted cell, while a corresponding insulating member on the negative contact assembly prevents electrical contact with the positive terminal of an improperly inserted cell.

Another approach provides modifications to the device's terminal so that a cell can be accommodated, regardless of how the cell is inserted. US-A-4,622,274 discloses a terminal construction for an electric power supply, wherein the terminal design is independent of the battery's orientation. Thus, the battery can be switched end-to-end without affecting the contact between the battery and the mating circuit in the receiving device.

US-A-4,002,808 discloses the use of a mechanical link, such as a spring-catch system, screwing or locking, to provide for reliable mechanical and electrical linkage between cylindrical electrical cells that are connected in an end-to-end configuration.

JP-A-61-22566 (Kokai), discloses a cylindrical alkaline battery whose positive and negative terminals are recessed below the crimped over portions of the outer metal jacket.

US-A-4,869,978 discloses the use of an electrically insulating film to prevent an electrical short circuit between the positive electrode case and the bottom plate. In another embodiment, an electrically insulating film is positioned between the negative electrode terminal and the washer, or between the gasket and the washer, in order to prevent the formation of a local cell such as might result in the leakage of electrolytic solution.

Cylindrical alkaline batteries made with the plastic label extended over a portion of the negative terminal are available as a commercial product. The centrally located and electrically conductive portion of the negative cover is recessed slightly below the insulating label, protecting the terminal's circular edge.

US-A-1,529,703 discloses a cylindrical cell having a flat terminal provided with an annular non-conductive separator in order to prevent electric current flow during inadvertent cell reversal.

FR-A-597057 discloses cells in which compact first and second terminals are constituted by the exposed non-planar surfaces of two nuts provided with an inner sleeve and a protruding pin, respectively. A celluloid outer ring surrounding and extending beyond the sleeved nut is provided in order to protect the connection, when made, between adjacent cells.

Thus, in a first aspect of the present invention, there is provided an electrochemical cell having a cylindrical housing, a protruding first terminal and a generally planar second terminal, wherein the second terminal has at least one electrically conductive portion and at least one electrically non-conductive portion, the non-conductive portion extending above the conductive portion such that when the cell is inserted into a device in reverse orientation with respect to an adjacent similar cell the non-conductive portion of the second terminal abuts the same polarity terminal of the adjacent similar cell so as to prevent the flow of electrical current to or from the adjacent cell,
characterised in that the second terminal is contoured with at least one convex or concave impression to create at least one upper region and at least one lower region, at least a part of the upper region being masked with an electrically non-conductive material to form the non-conductive portion of the second terminal, and at least a part of the lower region forming the conductive portion of the second terminal.

The cells of the invention can be employed in devices requiring only one cell, or in devices adapted to receive cells individually. The contacts of the device do not need to be specially configured to the receive the cells of the invention, provided that they are not identical for each terminal. The non-conductive element can then be so configured as to prevent contact with the terminal contact of the device intended for the other terminal of the cell.

A suitable configuration in such an instance may be where one of the terminals of the device is narrower than the other. The non-conductive element of the cell may then take the form of two walls spaced sufficiently widely to receive the narrower terminal but not the wider. Reversal is thereby prevented.

The cells of the invention are particularly useful where two or more cells must be inserted end-to-end in a device. Thus, the present invention further provides a cell intended for tandem operation with similar cells, the positive terminals of the cells being configured to electrically contact the negative terminals, and wherein one terminal protrudes away from the cell to contact the opposite terminal on the adjacent cell, and a non-conductive element associated with one cell is so configured as to allow the protruding terminal to electrically contact the opposite terminal, and wherein, when a cell is reversed, the similar terminals equipped with non-conducting elements are prevented from making contact by the non-conducting elements. The non-conductive element is associated with the terminal contacted by the protruding terminal.

In general, the protruding terminal will be equipped with a central umbo or knob to make contact with the opposite terminal. The opposite terminal will generally approximate to planarity, although various contouring effects are used to lend flexibility and resilience to the terminal. The generally planar terminal is that which is equipped with the non-conductive element.

The element may take any form, provided that the protected terminal cannot electrically contact another generally planar terminal. Thus, one suitable configuration would be a circle about the circumference of the terminal. Alternatively a series of dots of non-conductive material might serve as the element. provided that contact with the opposite terminal of another cell can be made. Other configurations will be apparent to those skilled in the art, and further examples are given below.

The substance of the non-conductive element is not critical, provided that currents able to be generated by cells cannot cross the substance. Thus, it will be appreciated that many substances are suitable, and may be chosen on such criteria as resistance to wear-and-tear and the ability to be attached to the cell.

The terminal is contoured to protrude in chosen areas and masked, for example coated, with non-conductive material. This may be particularly applicable where the label of the cell extends over the terminal. The label can then extend over a ridge on the terminal, forming the non-conductive element.

It will also be appreciated that the terminal may be recessed below the end of the cell, so that the non-conductive element protrudes only relatively, or the terminal may be in a normal position for similar cells, but with the element located thereon to protect the cell from reversal.

In a preferred embodiment, a pair of cylindrical electrochemical cells according to the present invention are aligned end-to-end. The first cell has a cylindrical housing, a first terminal and a second terminal. The first terminal is secured to one end of the housing while the second terminal is secured to the opposite end of the housing. The terminals are electrically isolated from each other. The second cell has a cylindrical housing with a first terminal and a generally planar, contoured and masked second terminal. The second cell's first terminal is secured to one end of the second cell's housing while the second cell's second terminal is secured to the opposite end of the second cell's housing. The second cell's terminals are electrically isolated from each other. The second cell's second terminal has an interior surface and an exterior surface which are located on opposite sides of the second cell's second terminal. The exterior surface of the second cell's second terminal comprises an electrically conducting portion and an electrically non-conducting portion. The electrically non-conducting portion extends above the electrically conductive portion. The second cell is cooperatively arranged with the first cell to abut the electrically non-conductive portion of the second cell's second terminal against the first cell's second terminal thereby preventing the flow of electrical current between the first cell and the second cell.

In another embodiment, a pair of cylindrical electrochemical cells according to the present invention are covered with electrically non-conductive labels and aligned end-to-end. The first cell has a cylindrical housing, a first terminal and a second terminal. The first terminal is secured to one end of the housing and the second terminal is secured to the opposite end of the housing. The terminals are electrically isolated from each other. The second cell has a cylindrical housing, a first terminal, a generally planar, contoured and masked second terminal and a label. The first terminal is secured to one end of the second cell's housing and the second terminal is secured to the opposite end of the second cell's housing. The second cell's terminals are electrically isolated from each other. The second cell's second terminal comprises an interior surface and an exterior surface which are located on opposite sides of the second cell's second terminal. The label is secured to the circumference of the second cell's cylindrical housing and extends over the end of the second cell's housing to which the second terminal is secured so that the label electrically insulates at least a portion of the exterior surface of the second cell's second terminal. The second cell is cooperatively arranged with the first cell to abut the electrically insulated portion of the second cell's second terminal against the first cell's second terminal thereby preventing the flow of electrical current between the first cell and the second cell.

In another embodiment, the present invention provides an electrochemical cell including a cylindrical housing, a first terminal and a generally planar, contoured and masked second terminal. The first terminal is secured to one end of the housing and the second terminal is secured to the opposite end of the housing. The first and second terminals are electrically isolated from each other. The second terminal has an interior surface and an exterior surface. The exterior surface is located on the opposite side of the second terminal from the interior surface. The exterior surface comprises an electrically conductive portion and an electrically non-conductive portion that extends above the conductive portion. Therefore, when the cell is inserted into a device so that the cell's electrical polarities are incorrectly oriented, the electrically non-conductive portion of the second terminal's exterior surface will prevent the flow of electrical current from the cell to the device or an adjacent cell.

In yet another embodiment, an electrochemical cell according to the present invention includes a cylindrical housing, a first terminal, a generally planar, contoured and masked second terminal and a label. The first terminal is secured to one end of the cell's housing and the second terminal is secured to the opposite end of the cell's housing. The second terminal has an interior surface and an exterior surface. The exterior surface is located on the second terminal opposite the interior surface. The cell's terminals are electrically isolated from each other. The label is secured to the circumference of the cell's housing and extends over the end of the housing to which the second terminal is secured so that the label electrically insulates at least a portion of the exterior surface of the second terminal. Therefore, when the cell is inserted into a device so that the cell's electrical polarities are incorrectly oriented, the electrically non-conductive portion of the second terminal's exterior surface will prevent the flow of electrical current from the cell to the device or an adjacent cell.

The present invention is of particular use in preventing cell reversal in a device that uses three or more cells aligned in an end-to-end configuration and in which the reversed cell is positioned between the two end cells. The present invention is also of use where the reversed cell is located on the end of a series of cells aligned end-to-end. The problem of cell reversal may even be overcome by using a battery having a terminal of the present invention in a device that uses a single cell.

Batteries of the present invention utilise terminals that prevent the flow of electric current between adjacent cells, aligned end-to-end in a multicell device, when one of the cells is inserted so that its positive and negative terminals are reversed. Two or more cells may be considered as being aligned end-to-end when the terminal of one battery contacts the terminal of an adjacent battery, or when two similar terminals are only prevented from being in contact by at least one being a terminal of the invention, and the longitudinal axes of the cells form a straight line. When properly inserted into a device that uses three or more cells, the positive terminal of the first cell abuts the negative terminal of the second cell and the positive terminal of the second cell abuts the negative terminal of the third cell.

On terminals that are useful with batteries of the present invention, the terminal's exterior surface should have at least one electrically conductive portion and at least one electrically non-conductive portion. Preferably, a majority of the terminal's exterior surface is electrically conductive so that a properly oriented and adjacent battery will have adequate opportunity to contact the terminal's conductive portion not masked with electrically non-conductive material.

The electrically non-conductive portion of the terminal preferably only covers a minor amount of the terminal's exterior surface, and will generally consist of a portion of the terminal's exterior surface masked by an electrically non-conductive material. The electrically non-conductive material is preferably permanently secured to the terminal, i.e. the non-conducting surface cannot be easily removed by the consumer and, therefore, will remain attached to the terminal during normal handling and use of the battery.

The non-conductive portion may be made from any configuration of electrically non-conductive material capable of preventing undesirable electrical contact with an adjacent cell. Suitable configurations of electrically non-conductive material include: a continuous circle; a series of dots placed close together to form a circle; three dots spaced equally about a circle; and one strip placed appropriately across the exterior surface of the terminal.

The conductive portion and the non-conductive portion are cooperatively arranged so that the non-conductive portion extends above the conductive portion. It will be appreciated that the non-conductive surface extends above the conductive portion, and the conductive portion should not be able to contact a flat surface, as this would first be abutted by the non-conductive portion.

The terminal's exterior surface is contoured to create at least one upper region and at least one lower region. The contours are formed by creating convex or concave impressions in the surface of the terminal. The upper region is that section of the terminal's exterior surface that protrudes above a lower region of the terminal's exterior surface. In one embodiment, the upper region may be the top of a convex impression that extends upwardly from the terminal's exterior surface.

In another embodiment, the upper region is the essentially flat section of the terminal's exterior surface that exists above a concave impression in the terminal's exterior surface. Since the terminal has an upper region and a lower region, it will be appreciated that at least a part of the upper region should be masked with an electrically non-conductive material and at least a part of the lower region should be exposed to permit electrical contact. Preferably, the central area of the terminal's exterior surface is electrically conductive and forms a part of the lower region while the electrically non-conductive portion forms a part of the upper region and surrounds the conductive lower region.

A preferred electrically non-conductive material for use on a terminal incorporated into a battery of the present invention is a resin that has been cured with ultraviolet light and/or heat. One example of a suitable material is ENVIBAR XO281R (trade mark) made by Union Carbide of Danbury, Connecticut, USA. A second example of a suitable material is manufactured by Loctite Corporation of Newington, Connecticut, USA and is identified as FMD 207B. A third material, identified as E91-31, is produced by PPG Industries of Pittsburgh, Pennsylvania, USA.

The critical characteristic of the material applied to the terminal is not the chemical composition. The required material properties are (1) electrical non-conductivity and (2) being capable of secure attachment to the surface of the terminal. In addition to resins that can be cured with ultraviolet light and/or heat, other suitable insulating materials include tape, paints and hot melt adhesives. Any tape that has an adhesive on one side and is electrically non-conductive can be used. For example, suitable tapes can be made from thin strips of polyvinyl chloride that have been coated on one side with an adhesive.

Terminals that are suitable for use in batteries of the present invention can be made by roll-coating the electrically non-conducting material onto the terminal's exterior surface so that the electrically non-conductive material is applied to only the exterior surface of the terminal's upper region. The coated terminal is then exposed to ultraviolet light and/or heat for a sufficient period of time to cure the resin. Typical curing times can vary from twenty seconds to one minute depending on the resin used.

A specific method is as follows. First, place the terminals on a conveyor belt so that the exterior surface of each terminal faces upward. The belt can then carry the terminals beneath a roll coating apparatus which is designed to apply a thin coating of, for example, ENVIBAR X0281R resin to just the terminal's upper region. The terminals may then be transported by the conveyor belt into a curing oven that is equipped with ultraviolet lights. The American Ultraviolet Company of Murray Hill, New Jersey manufactures a suitable curing oven. The speed of the conveyor belt and the ultraviolet lights should be selected so that each terminal is exposed to 12 watts/mm [300 W/inch] of ultraviolet light for approximately 40 seconds. As the terminals exit the curing oven, the resin will be electrically non-conductive and securely attached to the surface of the terminals.

Other preferred embodiments and aspects are as follows.

In one aspect, a pair of electrochemical cells according to the present invention includes:
(a) a first electrochemical cell having a cylindrical housing, a first terminal secured to one end of the housing, a second terminal secured to the end of the housing opposite the first terminal and electrically isolated from the first terminal; and
(b) a second electrochemical cell having a cylindrical housing, a first terminal secured to one end of the housing, a generally planar, contoured and masked second terminal secured to the end of the housing opposite the second cell's first terminal and electrically isolated from the second cell's first terminal, the second cell's second terminal having an interior surface and an exterior surface, the exterior surface being located on the second cell's second terminal opposite the interior surface, the exterior surface comprising an electrically conductive portion and an electrically non-conductive portion, the non-conductive portion extending above the conductive portion so that, when the second electrochemical cell is cooperatively arranged to abut the electrically non-conductive portion of the second cell's second terminal against the first cell's second terminal, flow of electrical current between the first cell and the second cell is prevented.

It is preferred that the first cell's second terminal and the second cell's second terminal have the same electrical polarity.

The electrically non-conductive portion is preferably permanently secured to the exterior surface of the second cell's second terminal.

Advantageously, the first cell's second terminal has an interior surface and an exterior surface, the exterior surface on the first cell's second terminal comprises an electrically conductive portion and an electrically non-conductive portion, the electrically non-conductive portion on the first cell's second terminal extends above the electrically conductive portion of the first cell's second terminal so that, when the second cell is cooperatively arranged with the first cell to abut the electrically non-conductive portion of the first cell's second terminal against the electrically non-conductive portion of the second cell's second terminal, flow of electrical current between the first cell and the second cell is prevented.

The exterior surface of the second cell's second terminal is contoured and masked with an electrically non-conductive material to comprise an electrically non-conductive upper region and an electrically conductive lower region, the upper region protruding above the lower region so that, when the second cell is cooperatively arranged with the first cell to abut the electrically non-conductive upper region of the second cell's second terminal against the first cell's second terminal, flow of electrical current between the first cell and the second cell is prevented.

As before, it is preferred that the electrically non-conductive material on the upper region is permanently secured to the exterior surface of the second cell's second terminal, and it is advantageous for the electrically non-conductive surface of the second cell's second terminal to cover only a minor amount of the exterior surface of the second cell's second terminal. The electrically conductive surface is, usefully, centrally located on the exterior surface of the second cell's second terminal.

In another embodiment, the exterior surface of the second cell's second terminal is contoured to comprise an electrically conductive and centrally located lower region and an electrically non-conductive upper region which surrounds the lower region.

The electrically non-conducting portion may be masked with a resin which may be cured with ultraviolet light, or the electrically non-conductive portion is masked with a tape, particularly where the tape is shaped like a washer.

In another aspect, a pair of electrochemical cells according to the present invention includes:
(a) a first electrochemical cell having a cylindrical housing, a first terminal secured to one end of the housing, a second terminal secured to the end of the housing opposite the first terminal and electrically isolated from the first terminal, the second terminal having an interior surface and exterior surface, the exterior surface being located on the second terminal opposite the interior surface; and
(b) a second electrochemical cell having a cylindrical housing, a first terminal secured to one end of the housing, a generally planar, contoured and masked second terminal secured to the end of the housing opposite the first terminal and electrically isolated from the first terminal, the second terminal having an interior surface and an exterior surface which are located on opposite sides of the second cell's second terminal, a label, secured to the circumference of the second cell's cylindrical housing, extending over the end of the second cell's housing to which the second terminal is secured so that the label electrically insulates at least a portion of the exterior surface of the second cell's second terminal so that, when the second cell is cooperatively arranged with the first cell to abut the electrically insulated portion of the second cell's second terminal against the first cell's second terminal, flow of electrical current between the first cell and the second cell is prevented.

It is also advantageous for the first cell further to comprise a label, secured to the circumference of the first cell's cylindrical housing and extending over the end of the first cell's housing to which the first cell's second terminal is secured. The exterior surface of the second cell's second terminal is contoured to comprise an upper region and a lower region, the upper region protruding above the lower region. Thus, the label, secured to the circumference of the second cell's cylindrical housing, extends over the end of the second cell's housing to which the second cell's second terminal is secured and insulates the upper region of the second cell's second terminal so that, when the second cell is cooperatively arranged with the first cell to abut the electrically insulated upper region of the second cell's second terminal against the first cell's second terminal, flow of electrical current between the first cell and the second cell is prevented.

Again, it is preferred that the first cell's second terminal and the second cell's second terminal have the same electrical polarity.

In a further aspect, there is provided an electrochemical cell, including:
(a) a housing;
(b) a first terminal secured to one end of the housing; and
(c) a generally planar, contoured and masked second terminal, secured to the end of the housing opposite the first terminal and electrically isolated from the first terminal, the second terminal having an interior surface and an exterior surface, the exterior surface comprising an electrically conductive portion and an electrically non-conductive portion positioned so that the electrically non-conductive portion extends above the electrically conductive portion.

The electrically non-conductive surface is preferably characterised as described above for other embodiments.

In a yet further aspect, there is provided an electrochemical cell, including:
(a) a cylindrical housing;
(b) a first terminal secured to one end of the housing;
(c) a generally planar, countered and masked second terminal, secured to the end of the housing opposite the first terminal and electrically isolated from the first terminal, the second terminal having an interior surface and an exterior surface, the exterior surface being located on the second terminal opposite the interior surface and contoured to comprise an upper region and a lower region; and
(d) a label, secured to the circumference of the housing, extending over the end of the housing to which the second terminal is secured so that the label electrically insulates at least a portion of the upper region of the second terminal.

In another aspect, a pair of electrochemical cells according to the present invention includes;
(a) a first electrochemical cell having a cylindrical housing, a first terminal secured to one end of the housing, a second terminal secured to the end of the housing opposite the first terminal and electrically isolated from the first terminal; and
(b) a second electrochemical cell having a cylindrical housing, a first terminal secured to one end of the housing, a generally planar, contoured and masked second terminal secured to the end of the housing opposite the second cell's first terminal and electrically isolated from the second cell's first terminal, the second cell's second terminal having an interior surface and an exterior surface, the exterior surface contoured and masked with an electrically non-conductive material to comprise an electrically conductive and centrally located lower region and an electrically non-conductive upper region which surrounds and extends above the lower region, the upper region covering a minor amount of the second cell's exterior surface so that, when the second electrochemical cell is cooperatively arranged to abut the electrically non-conductive upper region of the second cell's second terminal against the first cell's second terminal, flow of electrical current between the first cell and the second cell is prevented.

The present invention will now be further illustrated with respect to the accompanying drawings, in which:
Figure 1 is a cross section of a battery of the present invention in which a portion of the negative terminal has been coated with an electrically non-conductive material;
Figure 2 is a cross section of a battery of the present invention in which the circumferential portion of the negative terminal's exterior surface has been coated with an electrically non-conductive material;
Figure 3 is a plan view of a terminal that can be used with batteries of the present invention;
Figure 4 illustrates the use of a washer-shaped insulator to provide protection against cell reversal;
Figure 5 illustrates how a cell's label can be extended to electrically insulate a portion of the terminal's exterior surface; and
Figure 6 illustrates how cells of the present invention fail to make electrical contact when one of the cells is reversed.

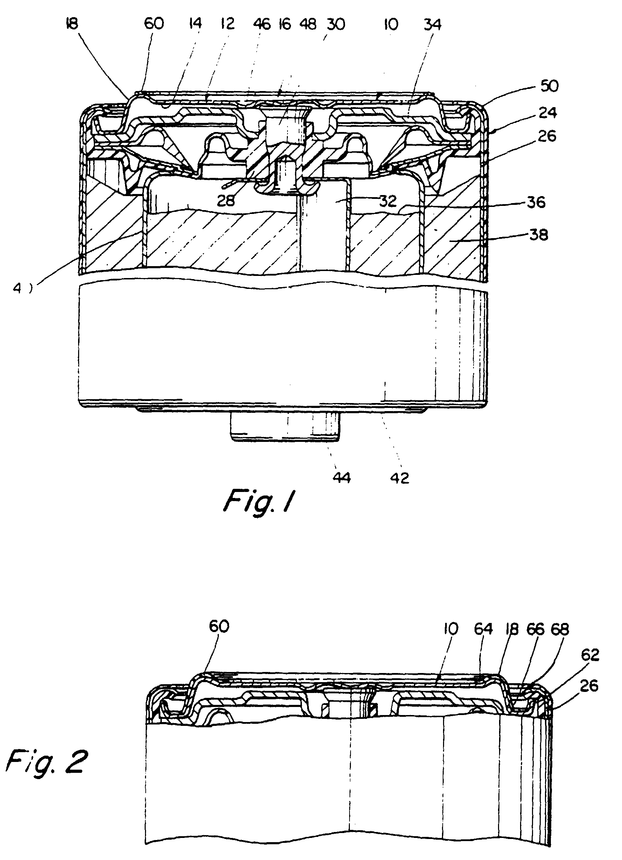

A preferred embodiment of the present invention is shown in Figure 1. In this drawing, the terminal's exterior surface 12 is facing upward while the terminal's interior surface 14 is facing downward. The central area 16 of terminal 10 is slightly recessed below the circular ridge 18 that serves as the terminal's upper region. The exterior surface 12 of the circular ridge 18 has been coated with an electrically non-conductive material 60 that is permanently secured to the terminal. The central area 16 of the terminal's exterior surface is not coated with the non-conductive material. The thickness of the insulating material is approximately 0.05 mm [0.002 inch].

The internal components of the galvanic cell are contained within a sealed cylindrical housing 24. The housing is a metallic cup-shaped container 26 that is open at one end and closed at the other end. The open end of the housing is sealed by a seal assembly that includes a nylon seal 28, a brass rivet 30, a brass current collector 32 and a neutral cover 34. The nylon washer 28 electrically insulates the metallic container 26 from the brass rivet 30. The current collector 32 is secured to the seal 28 by rivet 30. Contained within the housing are: an anode 36, a cathode 38, separator 40 and electrolyte (not shown) which are arranged to produce an electric current. Current collector 32 contacts anode 36.

Attached to the closed end of housing 24 is terminal 42. Terminal 42 is made from tin-plated steel or nickel-plated steel. Projection welds are used to secure terminal 42 to container 26. Extending from the centre of terminal 42 is protrusion 44. The entire exterior surface of terminal 42 is electrically conductive. Terminal 42 is electrically connected to the cell's cathode so that it serves as the galvanic cell's positive terminal. Terminal 10 is secured to the end of housing 24 opposite terminal 42.

Terminals 10 and 42 are electrically isolated from each other. The contour of terminal 10 is characterised by concentric protrusion 18 and recesses 46 and 48 that extend a short distance from the essentially planar surface of terminal 10. The concentric impressions 18, 46 and 48 improve the terminal's flexural strength and help to ensure contact between the terminal 10 and rivet 30.

Terminal 10 is electrically connected to the cell's anode so that it serves as the galvanic cell's negative terminal. The upper region of terminal 10 is the top surface of concentric ring 18. The highest surface of ring 18 extends above the top of the galvanic cell's side wall 50.

Another embodiment is shown in Figure 2, where a continuous coating of electrically insulating material 60 is applied from the edge 62 of terminal 10 inwardly to a point 64 just inside the terminal's upper region 18. Such a terminal both eliminates the possibility of cell reversal and prevents the formation of an electrical short circuit between the circumferential portion 66 of terminal 10 and the inwardly crimped portion 68 of the metallic cup shaped container 26.

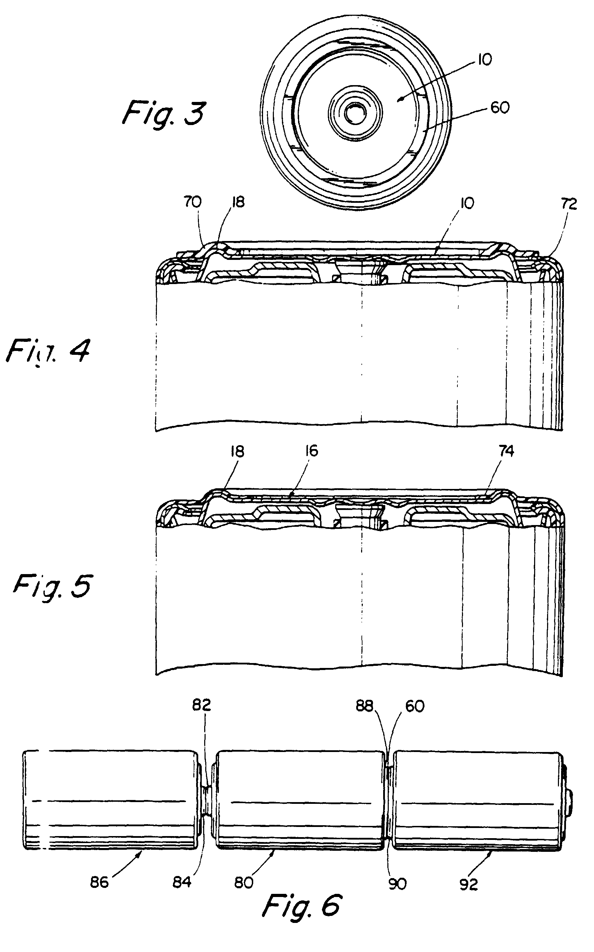

Figure 3 is a plan view of terminal 10. The electrically insulating material 60 has been applied to the top of the terminal's upper region 18 thereby forming a circle of insulation.

As shown in Figure 4, a third embodiment of the present invention utilises a washer shaped piece of electrically insulating material 70. This material is configured to cover the exterior surface of the terminal's upper region 18. An adhesive 72 applied to one side of the washer is used to permanently secure washer 70 to terminal 10.

A third embodiment of the present invention is shown in Figure 5, and uses the cell's plastic label 74 to electrically insulate the exterior surface of the terminal's upper region 18. This embodiment requires that the battery be labelled with a film that is electrically non-conductive. Suitable labels are described in US-A-4,911,994. By extending the label over the exterior surface of the terminal's upper region, the terminal's electrically conductive central area 16 is recessed below the electrically non-conductive label 74. Electrical contact between the terminal's central area and an adjacent cell can only be achieved if the adjacent cell is capable of extending into the recessed terminal's central area and contacting the recessed terminal's electrically conducting surface.

Three cylindrical galvanic cells, aligned end-to-end, are shown in Figure 6. The middle cell 80 has been reversed so that the positive terminal 82 of cell 80 contacts the positive terminal 84 of cell 86 while the negative terminal 88 of cell 80 abuts the negative terminal 90 of cell 92. Negative terminals 88 and 90 are not capable of conducting an electric current between batteries 80 and 92 because electrically non-conducting material 60 has been applied to the upper region of terminal 88 and the upper region of terminal 90.

## Claims

1. An electrochemical cell having a cylindrical housing, a protruding first terminal and a generally planar second terminal, wherein the second terminal has at least one electrically conductive portion and at least one electrically non-conductive portion, the non-conductive portion extending above the conductive portion such that when the cell is inserted into a device in reverse orientation with respect to an adjacent similar cell the non-conductive portion of the second terminal abuts the same polarity terminal of the adjacent similar cell so as to prevent the flow of electrical current to or from the adjacent cell,
characterised in that the second terminal is contoured with at least one convex or concave impression to create at least one upper region and at least one lower region, at least a part of the upper region being masked with an electrically non-conductive material to form the non-conductive portion of the second terminal, and at least a part of the lower region forming the conductive portion of the second terminal.

2. A cell according to claim 1 wherein the non-conductive material is permanently secured to the upper region of the second terminal.

3. A cell according to claim 1 or claim 2 wherein the protruding first terminal is equipped with a central umbo or knob to make contact with the opposite polarity terminal of an adjacent cell.

4. A cell according to any preceding claim wherein the second terminal is contoured with a ridge and the ridge is masked by the label of the cell extending over the ridge.

5. A cell according to any preceding claim wherein the non-conductive material is a resin.

6. A cell according to claim 5 wherein the resin has been cured with ultraviolet light.

7. A cell according to any of claims 1 to 4 wherein the non-conductive portion is formed by masking the upper region with tape.

8. A cell according to claim 7 wherein the tape is shaped like a washer.

9. A cell according to any of claims 1 to 6 wherein the non-conductive portion on the upper region is configured as a series of at least three spaced dots placed about a circle.

## Patentansprüche

1. Elektrochemische Zelle mit zylinderförmigem Gehäuse, einem hervorstehenden ersten Anschluß und einem im allgemeinen ebenen zweiten Anschluß, wobei der zweite Anschluß mindestens einen elektrisch leitenden Abschnitt und mindestens einen elektrisch nichtleitenden Abschnitt aufweist, wobei sich der nichtleitende Abschnitt oberhalb des leitenden Abschnitts erstreckt, so daß, wenn die Zelle in umgekehrter Ausrichtung zu einer benachbarten, gleichartigen Zelle in eine Vorrichtung eingesetzt wird, der nichtleitende Abschnitt des zweiten Anschlusses an den Anschluß mit der gleichen Polarität der benachbarten gleichartigen Zelle anstößt. um einen elektrischen Stromfluß zu oder von der benachbarten Zelle zu verhindern,
dadurch gekennzeichnet, daß der zweite Anschluß mit mindestens einer konvexen oder konkaven Prägung profiliert ist, um mindestens einen oberen Bereich und mindestens einen unteren Bereich zu erzeugen, wobei mindestens ein Teil des oberen Bereichs mit elektrisch nichtleitendem Material abgedeckt ist, um den nichtleitenden Abschnitt des zweiten Anschlusses zu erzeugen, und wobei mindestens ein Teil des unteren Bereichs den leitenden Abschnitt des zweiten Anschlusses bildet.

2. Zelle nach Anspruch 1, wobei das nichtleitende Material fest an dem oberen Bereich des zweiten Anschlusses angebracht ist.

3. Zelle nach Anspruch 1 oder Anspruch 2, wobei der vorstehende erste Anschluß mit einem mittleren Buckel oder Höcker versehen ist, um einen Kontakt mit dem entgegengesetzt gepolten Anschluß einer benachbarten Zelle herzustellen.

4. Zelle nach einem der vorstehenden Ansprüche, wobei der zweite Anschluß mit einem Wulst profiliert ist und der Wulst durch das Etikett der Zelle abgedeckt wird, das sich über den Wulst erstreckt.

5. Zelle nach einem der vorstehenden Ansprüche, wobei das nichtleitende Material ein Harz ist.

6. Zelle nach Anspruch 5, wobei das Harz mit ultraviolettem Licht ausgehärtet worden ist.

7. Zelle nach einem der Ansprüche 1 bis 4, wobei der nichtleitende Abschnitt durch Abdecken des oberen Bereichs mit Band gebildet wird.

8. Zelle nach Anspruch 7, wobei das Band wie eine Unterlegscheibe geformt ist.

9. Zelle nach einem der Ansprüche 1 bis 6, wobei der nichtleitende Abschnitt am oberen Bereich als Reihe von mindestens drei beabstandeten Punkten konfiguriert ist, um einen Kreis herum angeordnet sind.

## Revendications

1. Pile électrochimique comportant un boîtier cylindrique, une première borne en saillie et une deuxième borne généralement plane, la deuxième borne comportant au moins une partie électroconductrice et au moins une partie non électroconductrice, la partie non conductrice s'étendant au-dessus de la partie conductrice, de sorte que lors de l'insertion de la pile dans un dispositif dans une orientation inversée par rapport à une pile adjacente similaire, la partie non conductrice de la deuxième borne bute contre la borne de même polarité de la pile adjacente similaire, empêchant ainsi la circulation du courant électrique vers la pile adjacente ou à partir de celle-ci,
caractérisée en ce que la deuxième borne est profilée et comporte au moins une empreinte convexe ou concave pour former au moins une région supérieure et au moins une région inférieure, au moins une partie de la région supérieure étant masquée par un matériau non électroconducteur pour former la partie non conductrice de la deuxième borne, et au moins une partie de la région inférieure formant la partie conductrice de la deuxième borne.

2. Pile selon la revendication 1, dans laquelle le matériau non conducteur est fixé de façon permanente à la région supérieure de la deuxième borne.

3. Pile selon les revendications 1 ou 2, dans laquelle la première borne en saillie est équipée d'une protubérance ou d'un bouton central pour établir le contact avec la borne de polarité opposée d'une pile adjacente.

4. Pile selon l'une quelconque des revendications précédentes, dans laquelle la deuxième borne est profilée et comporte une nervure, la nervure étant masquée par l'étiquette de la pile s'étendant au-dessus de la nervure.

5. Pile selon l'une quelconque des revendications précédentes, dans laquelle le matériau non conducteur est une résine.

6. Pile selon la revendication 5, dans laquelle la résine a été durcie aux rayons ultraviolets.

7. Pile selon l'une quelconque des revendications 1 à 4, dans laquelle la partie non conductrice est formée par masquage de la région supérieure par une bande.

8. Pile selon la revendication 7, dans laquelle la bande a la forme d'une rondelle.

9. Pile selon l'une quelconque des revendications 1 à 6, dans laquelle la partie non conductrice sur la région supérieure est configurée sous forme d'une série d'au moins trois points espacés agencés autour d'un cercle.
